# EUROPÄISCHE PATENTSCHRIFT

(11) **EP 2 195 798 B1**
(45) Veröffentlichungstag und Bekanntmachung des Hinweises auf die Patenterteilung: **25.09.2013**
(21) Anmeldenummer: 08785066.5
(22) Anmeldetag: 25.07.2008
(51) Int. Cl.: G09B 9/04, G09B 19/16, A63B 69/04

(54) **FAHRLEHRGERÄT ZUM ERLERNEN DES FAHRENS MIT PFERDEKUTSCHEN**
APPARATUS FOR LEARNING TO DRIVE HORSE-DRAWN CARRIAGES
DISPOSITIF D'APPRENTISSAGE POUR L'APPRENTISSAGE DE LA CONDUITE D'UN ATTELAGE DE CHEVAUX

(30) Priorität: 24.08.2007 DE 202007011822 U
(43) Veröffentlichungstag der Anmeldung: 16.06.2010
(73) Patentinhaber: Encke, Ekkehard, 73776 Altbach (DE)
(72) Erfinder: Encke, Ekkehard, 73776 Altbach (DE)
(74) Vertreter: Fleck, Hermann-Josef
(86) Internationale Anmeldenummer: PCT/EP2008/006113
(87) Internationale Veröffentlichungsnummer: WO 2009/026999

(56) Entgegenhaltungen:
- EP-A- 1 454 661
- BE-A1- 798 102
- DE-A1- 3 108 593
- DE-C- 139 083
- DE-U1- 29 503 421
- GB-A- 135 437
- US-A- 3 751 828

## Beschreibung

Die Erfindung bezieht sich auf ein Fahrlehrgerät zum Erlernen des Fahrens mit Pfer-dekutschen mit an einem Gestell angekoppelten und geführten Leinen, auf die beim Halten der Leinen im simulierten Führbetrieb Gegenkräfte ausgeübt sind, welche die Stellungen insbesondere des Kopfes und des Halses nachbilden.

Ein derartiges Fahrlehrgerät ist in Max Pape, Die Kunst des Fahrens, Fahren und Anspannen nach den Richtlinien von Benno von Achenbach, Kosmos-Verlag, 2002, Seite 59 angegeben. Bei diesem bekannten Fahrlehrgerät sind in einer quer zur Fahrtrichtung vor dem Fahrschüler verlaufenden Platte horizontal beabstandete Ö-sen angebracht, durch die Leinen geführt sind, an deren herabhängenden freien Enden Gewichte angebracht sind. Durch Ändern der Zugkraft an den Leinen werden die Gewichte mehr oder weniger hochgezogen bzw. herabgelassen, wodurch ein gewisses Gefühl für das Halten und Bewegen der Leinen beim Fahren vermittelt werden soll. Auf diese Weise werden die tatsächlichen Gegebenheiten beim Fahren jedoch lediglich grob nachgebildet.

In der GB 135 437 A ist ein Spielgerät gezeigt, das einem Pferd nachgebildet ist und einen bewegbaren Kopf und Hals aufweist.

In der DE 39 41 498 A1 ist ein relativ aufwändiger Reitsimulator gezeigt, der einen künstlichen Pferdekörper enthält. Jedoch sind mit diesem Gerät typische Fahr-Lehrübungen nicht ausführbar.

Ein in der DE 31 08 593 A1 vorgeschlagener Fahrlehr- und -übungsgerät ist indes von seiner Ausgestaltung her wenig wirklichkeitsgetreu und arbeitet mit Leinen und Gewichtshilfen.

Weiterhin sind in den Schriften US 2004/0101811 A1, US 6,210,167 B1 und US 3,672,075 Reitlehrgeräte gezeigt, die für Fahrübungen jedoch nicht zu verwenden sind.

Die WO 99/28 008 A1 zeigt eine Vorrichtung mit einem von einem Zugtier gezogenen Wagen mit Pedalantrieb, mit dem ein realistischer Fahrlehrbetrieb jedoch ebenfalls nicht durchführbar ist.

Der Erfindung liegt die Aufgabe zugrunde, ein Fahrlehrgerät der eingangs genannten Art bereitzustellen, das beim Üben des Fahrbetriebs ein besseres Feingefühl vermittelt.

Diese Aufgabe wird mit den Merkmalen des Anspruches 1 gelöst. Hierbei ist vorgesehen, dass das Gestell eine Pferdeattrappe mit einem gegen eine Rückstellkraft in einer vertikalen Ebene gelenkig gelagerten Kopf und einem gegen eine weitere Rückstellkraft in einer Hori-zontalebene gelenkig gelagerten Hals aufweist und dass die Leinen beidseitig an den Kopf im Maulbereich angebunden sind.

Mit diesen Maßnahmen kann der Übende Bewegungen des Kopfes und auch des Halses über seine Bewegungssensorik verfeinert wahrnehmen und dabei auch visuell realitätsnah kontrollieren.

Zum Erreichen möglichst realitätsnaher Verhältnisse tragen dabei die Maßnahmen bei, dass die Leinen durch im Schulterbereich des Gestells, das zumindest im vorderen Bereich als Pferdeattrappe ausgestaltet ist, beidseitig angebrachte Leinenführungsringe verlaufen.

Verschiedene Ausgestaltungen ergeben sich dabei dadurch, dass die Rückstellkräfte durch Federelastizität, durch Gummielastizität, durch Gewichtskräfte, durch hydraulische Kräfte, durch magnetische Kräfte und/oder durch elektrische Kräfte gebildet sind. Auch Kombinationen mindestens zweier dieser verschiedenen Arten, die Rückstellkräfte zu realisieren, sind dabei möglich. Es ist denkbar dabei Bewegungsabläufe mittels Dämpfungsgliedern oder Anschlagelementen zu beeinflussen.

Eine gute Abstimmung auf reale Verhältnisse wird ferner dadurch erreicht, dass die Rückstellkraft für den Kopf so ausgelegt ist, dass der Kopf in Ruhestellung in seinem unteren Abschnitt seine vorderste, oberste (z. B. durch einen Anschlag bestimmte) Position einnimmt und entgegen der Rückstellkraft mittels der Leinen in eine zurückgezogene, tiefer liegende Stellung schwenkbar ist, und ferner dadurch, dass die Rückstellkraft für den Hals so ausgelegt ist, dass der Hals in Ruhestellung gerade in Längsrichtung des Gestells bzw. Geradeausrichtung gerichtet ist und entgegen der Rückstellkraft mittels der Leinen wahlweise in eine linke oder rechte Schwenkstellung des Halses und Kopfes schwenkbar ist.

Eine visuelle Kontrolle für das Halten beziehungsweise betätigen der Leinen wird dadurch begünstigt, dass die gewünschte Stellung des Kopfes beim Fahren mit einer Markierung relativ zum Hals kenntlich gemacht ist.

Des Weiteren kann zum Beeinflussen des Fahrgefühls vorgesehen sein, dass der Hals auch gegen eine noch weitere Rückstellkraft in einer vertikalen Ebene bewegbar ist.

Verschiedene Möglichkeiten die Halsbewegung zu realisieren, bestehen darin, dass ein gelenkiger Halsabschnitt vorhanden ist, der mehrere vertikale Gelenkachsen aufweist oder elastisch zum Ausführen einer kontinuierlichen Biegung ausgebildet ist.

Ist vorgesehen, dass beidseitig am vorderen Kopfbereich Umlenkelemente angeordnet sind, über die die Leinen umgelenkt und zurückgeführt sind an einen dahinter liegenden Befestigungspunkt des Gestells in der Weise, dass eine Kraftreduzierung bei Wegverlängerung in den gehaltenen Leinenabschnitten erreicht ist, so ergeben sich weitere Möglichkeiten, die Kräfte und Wege beim Halten und Führen der Leinen auf reale Gegebenheiten abzustimmen. Die Umlenkung ergibt dabei eine Kraftreduzierung bei Wegverlängerung nach Art des Flaschenzugprinzips. Hierbei können durch weitere Umlenkungen und Verwendung von Rollen oder Reibführungen die Kräfte und Wege an den Leinen variiert werden. Zusammen mit unterschiedlichen Rückstellkräften durch Wahl der Federn oder anderer Krafterzeugungsmittel kann dabei eine gewünschte Abstimmung erreicht werden.

Für das Üben vorteilhafte Ausgestaltungsvarianten bestehen ferner darin, dass der Hals in einen Brücken- und Sitzbereich oder eine stationäre Halterung übergeht.

Das Fahrlehrgerät kann nicht nur für einen Einspänner, sondern auch für praktisch beliebige Varianten von Mehrspännern einfach durch Vervielfachung des gezeigten Grundprinzips ausgelegt werden.

Durch den erfindungsgemäßen Aufbau sind die Griffe zum Führen von Pferden beim Fahren realistisch darstellbar, lehrbar und erlernbar. Im Gegensatz zum Stand der Technik hat der Fahrer nicht nur die Möglichkeit seine Bewegung durch Fühlen zu kontrollieren, sondern gleichzeitig auch visuell durch die Bewegung des Kopfes und Halses. Rückstellkräfte sind auf reale Verhältnisse abgestimmt. Das Fahrlehrgerät ermöglicht eine Pferde schonende Ausbildung.

Die Erfindung wird nachfolgend anhand von Ausführungsbeispielen unter Bezugnahme auf die Zeichnungen näher erläutert. Es zeigen:
- Fig.1: einen wesentlichen Teil eines Fahrlehrgeräts in seitlicher Ansicht,
- Fig. 2: ein Fahrlehrgerät nach Fig. 1 in Draufsicht,
- Fig. 3: ein Beispiel für ein mehrspänniges Fahrlehrgerät in seitlicher Ansicht und
- Fig. 4: ein weiteres Ausführungsbeispiel für ein mehrspänniges Fahrlehrgerät in schematischer Ansicht in Draufsicht.

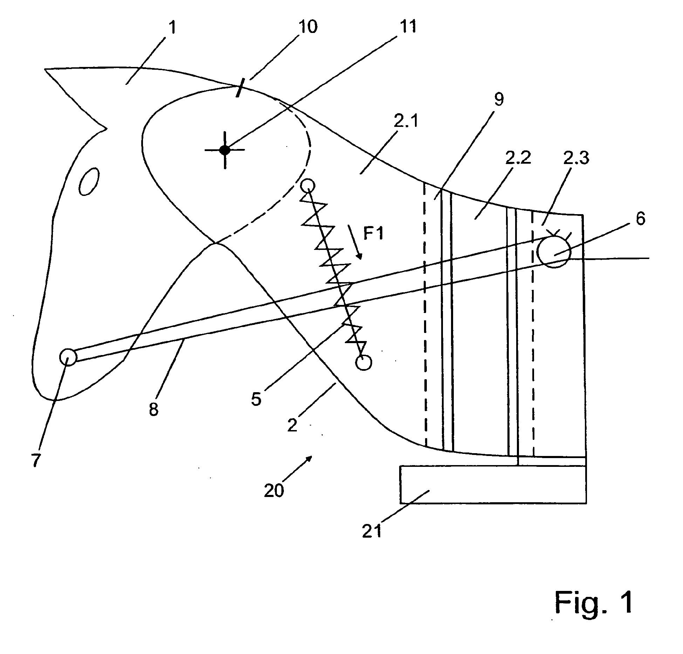

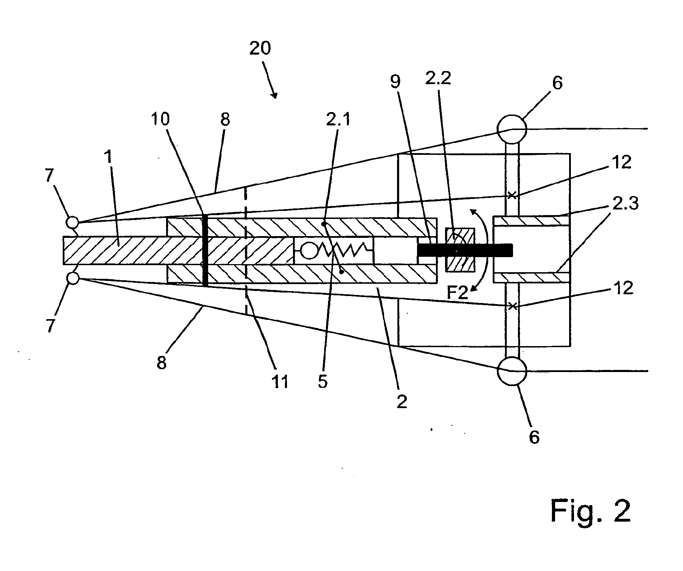

Fig. 1 zeigt als wesentlichen Teil des Fahrlehrgeräts auf einer Seite einen Abschnitt des Gestells 20 mit einem Kopf 1 und einem Hals 2, wobei der hintere obere Teil des Kopfes an dem vorderen oberen Teil des Halses 2 gelenkig in einer horizontalen Drehachse 11 gelagert ist, die zum Beispiel mit einem Schraubbolzen oder andere gängige Lagerachse realisiert ist. Am unteren Teil des Kopfes 1, und zwar im Bereich des Mauls, ist eine Lagerstelle für eine Leine 8 angeordnet, die zum Beispiel als Leinenumlenkung 7 ausgestaltet ist. Im hinteren Halsbereich bzw. Nacken- oder Schulterbereich ist ein Leinenführungsring 6 zum Durchführen der Leine 8 angeordnet. Im oberen, hinteren Kopfbereich und vorderen, oberen Halsbereich ist eine Markierung 10 (als durchgehender Strich, Kerbe oder dgl.) für die richtige Kopfstellung beim Fahren angeordnet. Hinter dem Gelenk 11 ist zwischen dem hinteren Kopfabschnitt und dem zugekehrten Halsbereich eine Zugfeder 5 oder ein Gummi angebracht, mit der/dem eine Rückstellkraft F1 erzeugt wird, um den Kopf 1 in eine Ruhestellung zu bewegen, in der der untere Teil des Kopfes eine vorderste, oberste Stellung einnimmt. Zwischen dem vorderen Halsabschnitt 2.1 und einem hinteren Halbabschnitt 2.3 ist ein gelenkiger Halbabschnitt 2.2 angeordnet, über den der Hals in einer horizontalen Ebene ausgehend von einer Ruhestellung in einer Mittellängsebene des eine Pferdeattrappe darstellenden Gestells 20 gegen eine weitere Rückstellkraft F2 (vgl. Fig. 2) nach links oder nach rechts auslenkbar ist. Vorliegend weist der gelenkige Halsabschnitt 2.2 zum Erzeugen der Rückstellkraft eine flächig in Längsrichtung und Vertikalrichtung ausgedehnte Gummiplatte 9 auf. Anstelle einer Gummiplatte 9 könnte auch eine Platte aus einem geeigneten elastischen Kunststoff oder elastischem Metall eingesetzt werden. Die plattenartige Ausbildung des die Rückstellkraft erzeugenden Elements hat den Vorteil, dass gleichzeitig ein stabiles Gelenk mit vertikaler Gelenkachse und eine Biegung über einen größeren Weg des Gestells 20 erreicht werden, so dass eine Halsbiegung eines lebenden Pferdes realistisch nachgebildet wird.

Wie Figur 2 in Draufsicht in teilweise geschnittener Darstellung zeigt, sind die Leinen 8, die Leinenringe 10, die Leinenumlenkungen 7 beidseitig in symmetrischer Anordnung zur Mittellängsebene vorhanden. Die Leinenführungsringe 6 sind dabei von einer Mittellängsebene entsprechend realen Verhältnissen weiter beabstandet als die Leinenumlenkungen 7, während das Rückstellelement 5 in Form der Feder und das weitere Rückstellelement 9 in Form der Gummiplatte im Bereich der (in Ruhestellung) Mittellängsebene des Gestells 20 bzw. der Pferdeattrappe liegen. In Draufsicht ist das Gestell 20 symmetrisch ausgebildet. Wie die Figuren 1 und 2 weiter zeigen, sind die durch den Leinenführungsring 6 von hinten nach vorn geführten Leinen 8 an den Umlenkelementen 7 umgelenkt und mit ihren freien Enden wieder zurückgeführt und in Längsrichtung und Vertikalrichtung im Bereich der Leinenführungsringe 6 befestigt, vorliegend jedoch in Querrichtung von den Leinenführungsringen 6 beabstandet. Mittels dieser Umlenkung ergibt sich beim Verstellen der Leinen in Längsrichtung zum Bewegen des Kopfes 1 ein vergrößerter (verdoppelter) Bewegungsweg, während sich die Bewegungskraft verkleinert (halbiert). Es können auch mehr Umlenkungen bspw. von den Fixierpunkten 12 wieder zurück in den Maulbereich, vorgesehen sein, so dass die Bewegungswege der Leinen 8 noch verlängert und die Bewegungskräfte noch verkleinert werden können. Mit dieser bzw. diesen Umlenkung(en) können realistische Verhältnisse, wie sie beim Fahren mit der Pferdekutsche tatsächlich vorliegen, gut angenähert werden. Weitere Abstimmungsmöglichkeiten ergeben sich durch die Wahl der Rückstellkräfte F1 für den Kopf 1 und F2 für den Hals 2. Auch können die Kräfte z.B. durch die Hebelverhältnisse der Hebel von Umlenkpunkt 7 und Gelenk 11 einerseits sowie dem Kraftangriffspunkt des Rückstellelements 5 am Kopfbereich zu dem Gelenk 11 mitbestimmt werden. Die Rückstellkräfte für den Hals 2 können durch Wahl der Krafteigenschaften des Rückstellelements 9 bestimmt werden.

Durch beidseitiges Ziehen der Leinen 8 nach hinten wird der Kopf 1 entgegen der Rückstellkraft F1 im Maulbereich nach hinten unten geschwenkt. Wird hingegen eine unterschiedliche Zugkraft durch den Fahrer an den beiden Leinen 8 erzeugt, wird der Hals mit dem Kopf horizontal in Richtung der größeren Kraft ausgelenkt, sofern diese die Rückstellkraft überwindet. Dadurch können gleichzeitig der Kopf 1 in die beim Fahren optimale Stellung geschwenkt und Lenkbewegungen durch Horizontalbewegung des Halses mit dem Kopf simuliert werden. Dabei können die real auftretenden Kräfte weitgehend naturgetreu nachgebildet werden. Durch die stetige Krümmung des Halses 2 über einen längeren Weg kann zudem die Biegung des Pferdes veranschaulicht werden, wobei auch die betreffende Kopfseite für den Fahrer deutlich zu sehen ist. Auf der Platte, insbesondere Gummiplatte 9, können Halselemente, wie Holzstreifen oder dergleichen aufgebracht sein, um einen fortlaufenden optischen Ausdruck der Seitenflächen des Gestells zu realisieren. Insgesamt kann das Gestell im Kopf- und Halsbereich z.B. plattenförmig aus Holz oder Kunststoff oder Metall oder einem anderen geeigneten Material ausgebildet sein. Aber auch eine plastische, räumlich ausgedehnte Form ist möglich.

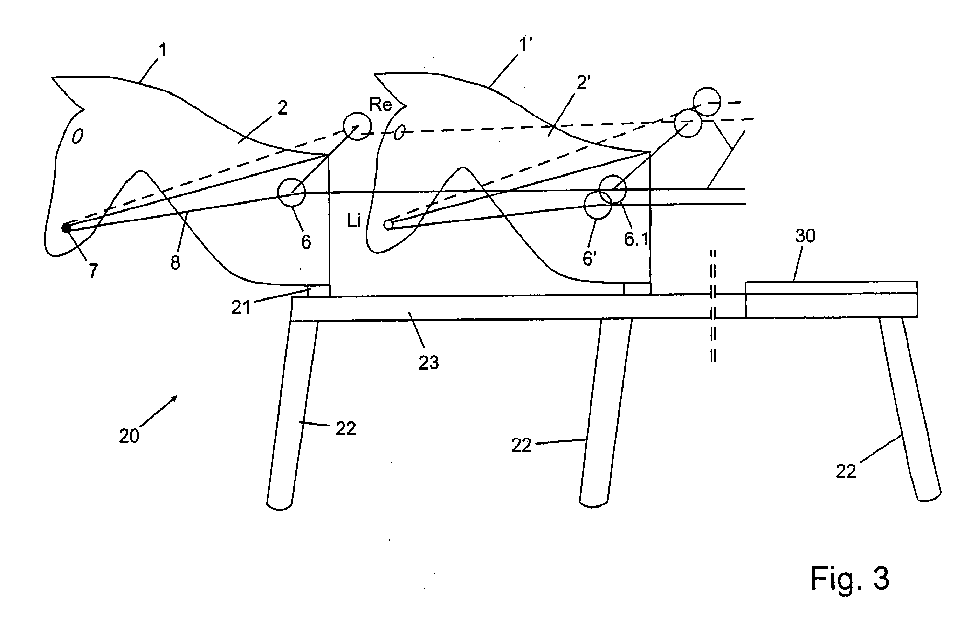

Wie Fig. 3 zeigt, kann der vordere Abschnitt aus Kopf 1 und Hals 2 auf einem Ankerteil 21 stabil aufgebracht und mit diesem auf einer Unterlage befestigt sein, so dass ein Fahrschüler, z.B. auf einem Stuhl sitzend, die Leinen 8 halten und bewegen kann etwa unter Anleitung eines Lehrers. Der Ankerteil 21 kann jedoch auch, wie Fig. 3 zeigt, in einen Brückenabschnitt 23 übergehen, der auf hinteren und vorderen Beinen 22 ruht und in seinem hinteren Bereich, z.B. 1,00 Meter bis 1,50 Meter vom Halsbereich entfernt einen Sitz 30 trägt, auf dem der Fahrschüler beim Üben Platz nehmen kann. Die Brücke 23 kann dann z.B. als Rücken des Pferdes angesehen werden.

Der vorstehend beschriebene mechanische Grundaufbau lässt nun vielfältige detailliertere Ausgestaltungen beispielsweise mit elektronischer Sensorik zur Kraftmessung an den Zügeln oder Stellungsmessung von Kopf und/oder Hals zu. Auch ist denkbar, Bewegungsabläufe mit Stellelementen zu beeinflussen und dem Übenden optische oder akustische, elektronisch erzeugte Rückmeldungen zu bieten.

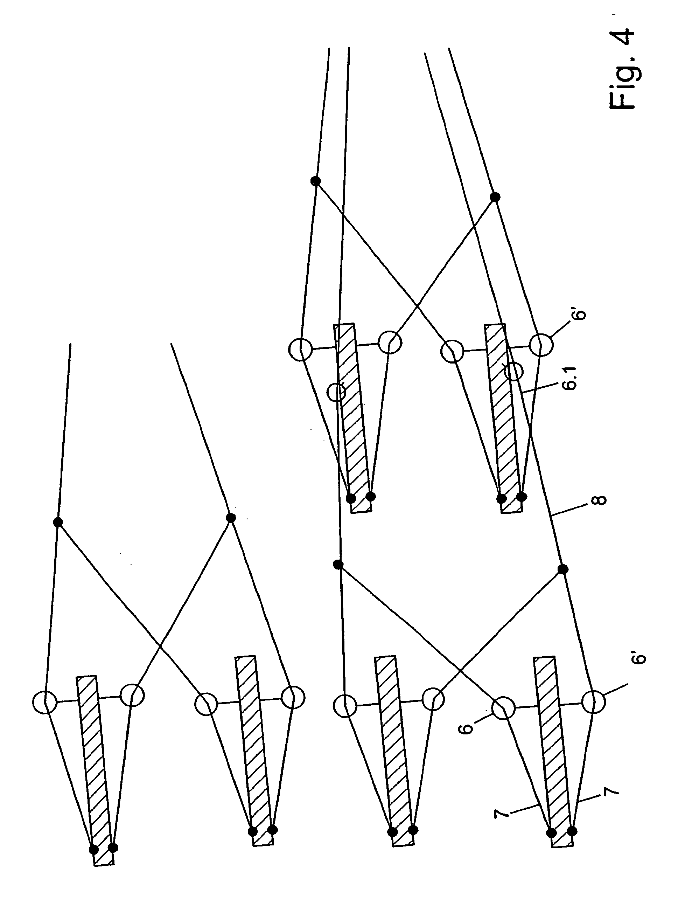

Wie Fig. 3 weiter zeigt, kann die in den Fig. 1 und 2 gezeigte Grundeinheit des Fahrlehrgeräts mehrfach aufgebaut sein, um z.B. einen Zweispänner mit zwei nebeneinander eingespannten Pferden oder Mehrspänner mit nebeneinander und/oder voreinander eingespannten Pferden zu realisieren. Die dafür erforderlichen Leinenführungen sind an sich bekannt und können auf die Anordnung der Fahrlehrgeräte entsprechend übertragen werden. Ein Beispiel hierfür ist in Fig. 4 gezeigt.

## Patentansprüche

1. Fahrlehrgerät zum Erlernen des Fahrens mit Pferdekutschen mit an einem einen kopf (1) und einen Hals (2) einer Pferdeattrappe aufweisenden Gestell (20) angekoppelten und geführten Leinen, auf die beim Halten der Leinen (8) im simulierten Führbetrieb Gegenkräfte ausgeübt sind, welche die Stellungen insbesondere des Kopfes (1) und des Halses (2) nachbilden,
**dadurch gekennzeichnet,**
**dass** das Gestell (20) einen gegen eine Rückstellkraft (F1) in einer vertikalen Ebene in einer horizontalen Drehachse (11) an dem Hals (2) gelenkig gelagerten Kopf (1) und einen gegen eine weitere Rückstellkraft (F2) in einer Horizontalebene gelenkig gelagerten Hals (2) aufweist und dass die Leinen (8) beidseitig an den Kopf (1) im Maulbereich angebunden sind, wobei die Rückstellkraft (F1) für den Kopf (1) so ausgelegt ist, dass der Kopf (1) in Ruhestellung in seinem unteren Abschnitt seine vorderste, oberste Position einnimmt und entgegen der Rückstellkraft (F1) mittels der Leinen (8) in eine zurückgezogene, tiefer liegende Stellung schwenkbar ist, und
wobei die Rückstellkraft (F2) für den Hals (2) so ausgelegt ist, dass der Hals (2) in Ruhestellung gerade in Längsrichtung des Gestells (20) gerichtet ist und entgegen der Rückstellkraft (F2) mittels der Leinen (8) wahlweise in eine linke oder rechte Schwenkstellung des Kopfes (1) schwenkbar ist.

2. Fahrlehrgerät nach Anspruch 1,
**dadurch gekennzeichnet,**
**dass** die Leinen (8) durch im Schulterbereich des Gestells (20), das zumindest im vorderen Bereich als Pferdeattrappe ausgestaltet ist, beidseitig angebrachte Leinenführungsringe (6) verlaufen.

3. Fahrlehrgerät nach Anspruch 1 oder 2,
**dadurch gekennzeichnet,**
**dass** die Rückstellkräfte (F1, F2) durch Federelastizität, durch Gummielastizität, durch Gewichtskräfte, durch hydraulische Kräfte, durch magnetische Kräfte und/oder durch elektrische Kräfte gebildet sind.

4. Fahrlehrgerät nach einem der vorhergehenden Ansprüche,
**dadurch gekennzeichnet,**
**dass** die gewünschte Stellung des Kopfes (1) beim Fahren mit einer Markierung (10) relativ zum Hals (2) kenntlich gemacht ist.

5. Fahrlehrgerät nach einem der vorhergehenden Ansprüche,
**dadurch gekennzeichnet,**
**dass** der Hals (2) auch gegen eine noch weitere Rückstellkraft in einer vertikalen Ebene bewegbar ist.

6. Fahrlehrgerät nach einem der vorhergehenden Ansprüche,
**dadurch gekennzeichnet,**
**dass** ein gelenkiger Halsabschnitt (2.2) vorhanden ist, der mehrere vertikale Gelenkachsen aufweist oder elastisch zum Ausführen einer kontinuierlichen Biegung ausgebildet ist.

7. Fahrlehrgerät nach einem der vorhergehenden Ansprüche,
**dadurch gekennzeichnet,**
**dass** beidseitig am unteren vordersten Kopfbereich im Bereich des Mauls Umlenkelemente (7) angeordnet sind, über die die Leinen (8) umgelenkt und zurückgeführt sind an einen dahinter liegenden Befestigungspunkt des Gestells (20) im hinteren Halsbereich, Nackenbereich oder Schulterbereich und durch einen dort vorhandenen Leinenführungsring (6) geführt sind, wobei die Leinen (8), die Leinenumlenkungen (7), die Leinenführungsringe (6) beidseitig symmetrisch zur Mittellängsebene des Gestells (20) angeordnet und die Leinenführungsringe (6) von der Mittellängsebene weiter beabstandet sind als die Leinenumlenkungen (7), wodurch eine Kraftreduzierung bei Wegverlängerung in den gehaltenen Leinenabschnitten erreicht ist.

8. Fahrlehrgerät nach einem der vorhergehenden Ansprüche,
**dadurch gekennzeichnet,**
**dass** der Hals (2) in einen Brücken- und Sitzbereich (23, 30) oder eine stationäre Halterung übergeht.

## Claims

1. A driver-training device for learning to drive horse-drawn vehicles with reins guided and attached to a frame (20) providing a head (1) and a neck (2) of a dummy horse onto which counter forces which simulate the positions especially of the head (1) and the neck (2) are exerted when the reins (20) are held in simulated driving mode,
**characterised in that**
the frame (20) provides a head (1) mounted in a manner articulated in a vertical plane against a restoring force (F1) within a horizontal rotary axis (11) on the neck (2), and a neck (2) mounted in a manner articulated in a horizontal plane against a further restoring force (F2), and that the reins (8) are attached on both sides of the head (1) in the muzzle region,
wherein the restoring force (F1) for the head (1) is designed in such a manner that, in its lowest portion, in the resting position, the head (1) occupies its frontmost, uppermost position and can be pivoted against the restoring force (F1) by means of the reins (8) into a retracted position disposed lower, and
wherein the restoring force (F2) for the neck (2) is designed in such a manner that, in the resting position, the neck (2) is directed straight ahead in the longitudinal direction of the frame (20) and can be optionally pivoted against the restoring force (F2) by means of the reins (8) into a left or a right pivoted position of the head (1).

2. The driver-training device according to claim 1
**characterised in that**
the reins (8) extend through rein-guide rings (6) fitted at both sides in the shoulder region of the frame (20), which is embodied at least in the front region as a dummy horse.

3. The driver-training device according to claim 1 or 2
**characterised in that**
the restoring forces (F1, F2) are provided by spring elasticity, rubber elasticity, gravitational forces, hydraulic forces, magnetic forces and/or electrical forces.

4. The driver-training device according to any one of the preceding claims,
**characterised in that**
the desired position of the head (1) during driving is indicated with a marking (10) relative to the neck (2).

5. The driver-training device according to any one of the preceding claims,
**characterised in that**
the neck (2) is also displaceable in a vertical plane against a further restoring force.

6. The driver-training device according to any one of the preceding claims,
**characterised in that**
an articulated neck portion (2.2) is present which provides several vertical axes or which is embodied to be elastic in order to perform a continuous bending.

7. The driver-training device according to any one of the preceding claims,
**characterised in that**
deflector elements (7) are arranged in the lower, frontmost head region, on both sides, in the region of the muzzle, by means of which the reins (8) are deflected and guided back to an attachment point of the frame (20) disposed at the rear, in the rear neck region, nape region or shoulder region and are guided by a rein-guide ring (6) provided there, whereas the reins (8), the rein-deflectors (7), the rein-guide rings (6) are arranged on both sides, symmetrically to the central, longitudinal plane of the frame (20), and the rein-guide rings (6) are spaced further from the central, longitudinal plane than the rein-deflectors (7), thereby achieving a reduction of force with a lengthening of the travel in the held rein portions.

8. The driver-training device according to any one of the preceding claims,
**characterised in that**
the neck (2) merges into a bridging and seating region (23, 30) or a stationary holder.

## Revendications

1. Dispositif pédagogique de conduite dévolu à l'apprentissage de la conduite d'attelages hippomobiles, équipé de rênes qui sont accouplées à un bâti (20) présentant la tête (1) et l'encolure (2) d'un cheval factice, sont guidées sur ledit bâti et sont soumises, lorsque lesdites rênes (8) sont tenues en main en mode de guidage simulé, à l'action de forces antagonistes reproduisant notamment les positions de ladite tête (1) et de ladite encolure (2),
**caractérisé par le fait**
**que** le bâti (20) comprend une tête (1) montée sur l'encolure (2) de manière articulée dans un plan vertical au niveau d'un axe horizontal de rotation (11), en opposition à une force de rappel (F1), et une encolure (2) montée de manière articulée dans un plan horizontal, en opposition à une autre force de rappel (F2) ; et par le fait que les rênes (8) sont rattachées à la tête (1) de part et d'autre, dans la région de la bouche, sachant que la force de rappel (F1) assignée à la tête (1) est conçue de façon telle que ladite tête (1) prenne en position de repos, par sa zone inférieure, son emplacement supérieur extrême situé le plus à l'avant, et puisse pivoter jusqu'à une position rétractée située plus bas, au moyen desdites rênes (8), en opposition à ladite force de rappel (F1), et
sachant que la force de rappel (F2) assignée à l'encolure (2) est conçue de façon telle que ladite encolure (2) soit orientée en ligne droite dans la direction longitudinale dudit bâti (20), en position de repos, et puisse sélectivement pivoter au moyen desdites rênes (8), en opposition à ladite force de rappel (F2), jusqu'à une position de ladite tête (1) résultant d'un pivotement à gauche ou à droite.

2. Dispositif pédagogique de conduite selon la revendication 1,
**caractérisé par le fait**
**que** les rênes (8) passent à travers des anneaux (6) de guidage desdites rênes, qui sont implantés de part et d'autre dans la zone marquant les épaules du bâti (20) configuré en un cheval factice, au moins dans la région antérieure.

3. Dispositif pédagogique de conduite selon la revendication 1 ou 2,
**caractérisé par le fait**
**que** les forces de rappel (F1, F2) sont développées par l'élasticité d'un ressort, par l'élasticité d'un caoutchouc, par des forces proportionnelles au poids, par des forces hydrauliques, par des forces magnétiques et/ou par des forces électriques.

4. Dispositif pédagogique de conduite selon l'une des revendications précédentes,
**caractérisé par le fait**
**que** la position souhaitée de la tête (1), au cours du déplacement, est identifiée par un repère (10) vis-à-vis de l'encolure (2).

5. Dispositif pédagogique de conduite selon l'une des revendications précédentes,
**caractérisé par le fait**
**que** l'encolure (2) peut également être mue dans un plan vertical, en opposition à une force de rappel encore différente.

6. Dispositif pédagogique de conduite selon l'une des revendications précédentes,
**caractérisé par**
la présence d'un segment articulé (2.2) de l'encolure qui est doté de plusieurs axes verticaux d'articulation, ou est de réalisation élastique en vue d'accomplir une flexion continue.

7. Dispositif pédagogique de conduite selon l'une des revendications précédentes,
**caractérisé par le fait**
**que** des éléments de renvoi (7) sont placés de part et d'autre dans la région de la bouche, dans la zone inférieure de la tête occupant la position la plus avancée, éléments par l'intermédiaire desquels les rênes (8) sont déviées et renvoyées au niveau d'un point de fixation situé derrière, sur le bâti (20), dans la zone postérieure marquant l'encolure, la nuque ou les épaules, et sont guidées par un anneau (6) de guidage desdites rênes qui est implanté dans cette zone, sachant que les rênes (8), les renvois (7) desdites rênes et les anneaux (6) de guidage desdites rênes sont disposés symétriquement de part et d'autre par rapport au plan médian longitudinal dudit bâti (20), et que lesdits anneaux (6) de guidage des rênes sont davantage éloignés dudit plan médian longitudinal que lesdits renvois (7) desdites rênes, procurant ainsi, lors d'un allongement de la course, une réduction de force dans les tronçons de rênes tenus en main.

8. Dispositif pédagogique de conduite selon l'une des revendications précédentes,
**caractérisé par le fait**
**que** l'encolure (2) fusionne dans une zone (23, 30) d'entretoisement et d'assise, ou dans un support stationnaire.
